# EUROPÄISCHE PATENTSCHRIFT

(11) **EP 3 519 785 B1**
(45) Veröffentlichungstag und Bekanntmachung des Hinweises auf die Patenterteilung: **20.01.2021**
(21) Anmeldenummer: 17777885.9
(22) Anmeldetag: 29.09.2017
(51) Int. Cl.: G01K 1/08, G01K 7/02

(54) **KABEL, TEMPERATURVORRICHTUNG UND VERFAHREN ZUM HERSTELLEN EINES KABELS**
CABLE, TEMPERATURE DEVICE, AND METHOD FOR PRODUCING A CABLE
CÂBLE, DISPOSITIF DE MESURE DE TEMPÉRATURE ET PROCÉDÉ DE FABRICATION D'UN CÂBLE

(30) Priorität: 30.09.2016 DE 102016118595
(43) Veröffentlichungstag der Anmeldung: 07.08.2019
(73) Patentinhaber: Heraeus Nexensos GmbH, 63801 Kleinostheim (DE); Mi-Sense BVBA, 3600 Genk (BE)
(72) Erfinder: DIETMANN, Stefan, 63755 Hanau (DE); MUZIOL, Matthias, 63533 Mainhausen (DE); WIENAND, Karlheinz, 63741 Aschaffenburg (DE); TEUSCH, Dieter, 63486 Bruchköbel (DE); JAENEN, Jean-Paul, 3600 Genk (BE); VEULEMANS, Jan, 3450 Geetbets (BE)
(74) Vertreter: Kilchert, Jochen
(86) Internationale Anmeldenummer: PCT/EP2017/074794
(87) Internationale Veröffentlichungsnummer: WO 2018/060435

(56) Entgegenhaltungen:
- EP-A1- 1 881 309
- WO-A1-2015/189109
- FR-A1- 2 959 562
- US-A- 5 711 608

## Beschreibung

Die Erfindung betrifft eine Temperaturmessvorrichtung, umfassend ein Kabel zum Kontaktieren eines Temperatursensors, umfassend einen Mantel, ein Dielektrikum und mindestens einen Leiter, wobei der mindestens eine Leiter in dem Mantel derart angeordnet ist, dass der Leiter von dem Mantel mit Hilfe des Dielektrikums räumlich getrennt ist. Des Weiteren bezieht sich die Erfindung auf ein Verfahren zum Herstellen eines Kabels für eine erfindungsgemäße Temperaturvorrichtung.

Temperaturmessvorrichtungen, insbesondere im Automobilbereich, bestehen insbesondere aus einem Kabel und einem mit dem Kabel verbundenen Temperatursensor. Es ist vorteilhaft, den Leiterabschnitt des Kabels, der direkt oder indirekt mit dem Temperatursensor verbunden wird, mit einem Dehnungsausgleichsabschnitt zu versehen. Ein Dehnungsausgleichselement muss dabei den schnellen Temperaturwechseln mit 1.500 K/s, Vibrationen bis 50 g und Temperaturen von größer 1.000 °C standhalten. Mechanische Spannungen entstehen insbesondere aufgrund unterschiedlicher Wärmeausdehnungskoeffizienten der verschiedenen Materialien der Temperaturmessvorrichtung oder aufgrund des Temperaturunterschieds zwischen Drähten der Temperaturmessvorrichtung und einer Temperaturmessvorrichtungs-Ummantelung.

Zur Herstellung der beschriebenen Temperaturmessvorrichtungen, insbesondere der Kabel von Temperaturmessvorrichtungen, werden die Kabel bislang inklusive der Länge für die zu schaffenden freiliegenden Leiterabschnitte abgelängt. Die derart erzeugten stumpfen Enden müssen in aufwändigen Folgearbeitsschritten konfektioniert werden. Dabei werden innenliegende Leiter freigelegt, indem der Mantel des Kabels und das Dielektrikum entfernt werden. Insbesondere erfordert eine anschließende Umformung mindestens eines freiliegenden Leiterabschnitts zu einem Dehnungsausgleichsabschnitt einen erheblichen Arbeitsaufwand an einer feinteiligen Zuleitung. In Fällen, in denen für das Dehnungsausgleichselement bzw. für den Dehnungsausgleichsabschnitt ein separates Bauelement verwendet wird, entstehen Kosten für die Beschaffung und die Montage des separaten Bauelements bzw. für den damit einhergehenden Verbindungsvorgang zur Verbindung des separaten Bauelements mit dem Kabel.

Beispielsweise wird in FR 2 959 562 A1 ein Temperatursensor offenbart, der eine hohlnadelartige Ummantelung aufweist. Darin ist das Messelement ausgebildet. Dieses Element, d.h. das Sensorelement weist einen Verbindungsdraht auf, der einen Dehnungsabschnitt aufweist.

EP 1 881 309 A1 zeigt hingegen einen Temperaturfühler für ein Widerstandsthermometer zur Verwendung im Abgasstrang von Verbrennungsmotoren. Es wird ein Kabel mit freigelegtem Leiter offenbart. Ebenfalls zu erkennen ist ein Anschlussdraht eines Temperatursensors gebogen.

In WO 2015/189109 A1 wird wiederum ein gebogenes und geprägtes Dehnungsausgleichselement offenbart, das als separates Bauteil ausgebildet ist. Das Dehnungsausgleichselement wird mit Positionierelementen mi einem Leiter und mit einem Anschlussdraht eines Temperatursensors verbunden.

Der Erfindung liegt die Aufgabe zu Grunde, eine weiterentwickelte Temperaturmessvorrichtung anzugeben, die hinsichtlich der Dauerbelastbarkeit weiterentwickelt ist.

Eine weitere Aufgabe der Erfindung besteht darin, ein weiterentwickeltes Verfahren zum Herstellen eines Kabels für eine erfindungsgemäße Temperaturvorrichtung anzugeben.

Erfindungsgemäß wird diese Aufgabe im Hinblick auf eine Temperaturmessvorrichtung durch die Merkmale des Anspruches 1 gelöst. Im Hinblick auf ein Verfahren zum Herstellen eines Kabels wird die Aufgabe durch die Merkmale des Anspruches 7 gelöst.

Die Erfindung beruht auf dem Gedanken, eine Temperaturmessvorrichtung, umfassend einen Temperatursensor, der mit mindestens einem Kabel verbunden ist, anzugeben.

Das Kabel umfasst einen Mantel, ein Dielektrikum und mindestens einen Leiter.

Der mindestens eine Leiter ist in dem Mantel derart angeordnet, dass der Leiter von dem Mantel mit Hilfe des Dielektrikums räumlich getrennt ist, wobei der mindestens eine Leiter mindestens einen freiliegenden Leiterabschnitt aufweist.

Der Temperatursensor weist mindestens einen Anschlussdraht auf, wobei der Anschlussdraht mit mindestens einem freiliegenden Leiterabschnitt des Leiters des Kabels verbunden ist.

Der Temperatursensor ist in einer Schutzhülse angeordnet, wobei die Schutzhülse zumindest abschnittsweise mit einem Schutzmaterial befüllt ist.

Erfindungsgemäß umfasst der freiliegende Leiterabschnitt einen gebogenen Dehnungsausgleichsabschnitt, der zumindest abschnittsweise eine die Federwirkung und die Steifigkeit des Dehnungsausgleichsabschnitts optimierende Prägung aufweist.

Als freiliegender Leiterabschnitt ist ein derartiger Abschnitt des Leiters zu verstehen, der nicht von einem Dielektrikum des Kabels abgedeckt ist. Vorzugsweise ist der freiliegende Leiterabschnitt außerdem nicht von dem Mantel des Kabels abgedeckt oder von dem Mantel radial umgeben.

Als eine Prägung ist ein derartiger Abschnitt des Dehnungsausgleichsabschnitts zu verstehen, der nicht nur gebogen, sondern zusätzlich bearbeitet ist. Mit anderen Worten kann der gebogene Dehnungsausgleichsabschnitt zumindest abschnittsweise eine zusätzliche Materialumformung aufweisen.

In einer bevorzugten Ausführungsform der Erfindung kann die Prägung als Plättung ausgebildet sein. Besonders bevorzugt ist eine Plättung als eine im Querschnitt ausgebildete mindestens zweiseitige Abflachung eines runden Leiterquerschnitts ausgebildet. Vorzugsweise handelt es sich bei den mindestens zwei Seiten, die in Relation zu einem runden Leiterquerschnitt eine Abflachung aufweisen, um gegenüberliegende Seiten.

Vorzugsweise ist eine Plättung derart ausgebildet, dass im Querschnitt des Dehnungsausgleichsabschnitts vier Seiten eine Abflachung aufweisen. Diese Abflachungen sind als Abflachungen in Relation zu einem runden Leiterquerschnitt zu verstehen. Die zumindest abschnittsweise ausgebildete optimierende Prägung des Dehnungsausgleichsabschnitts kann als Plättung in horizontaler Richtung und/oder vertikaler Richtung ausgebildet sein. Vorzugsweise ist die Plättung sowohl in horizontaler als auch in vertikaler Richtung ausgebildet.

Die optimierende Prägung bewirkt, dass einerseits alle mechanischen Spannungen zwischen dem Kabel und einem mit dem Kabel verbundenen Sensor, welcher wiederum vorzugsweise von einer Vergussmasse umgeben ist, aufgenommen werden. Die Prägung bewirkt somit eine maximale Federwirkung des Dehnungsausgleichsabschnitts. Andererseits bewirkt die optimierende Prägung eine Steifigkeit des Dehnungsausgleichsabschnitts, so dass bei einem Kabel mit mehreren Leitern auch bei einer hohen Vibration, die Leiter, insbesondere die freiliegenden Leiterabschnitte, nicht miteinander in Kontakt kommen. Eine Erhöhung der Steifigkeit des Dehnungsausgleichsabschnitts bewirkt außerdem, dass der Leiter, insbesondere der freiliegende Leiterabschnitt, nicht mit einem (separaten) Rohrabschnitt in Kontakt kommen kann.

Der Dehnungsausgleichsabschnitt ist zumindest abschnittsweise derart geprägt, insbesondere derart profiliert, besonders bevorzugt derart geplättet, dass die Federwirkung in Längsrichtung des Kabels ideale Werte erreicht und gleichzeitig in Querrichtung, d.h. in Querrichtung des Kabels, eine maximale Steifigkeit des Dehnungsausgleichsabschnitts entsteht. Eine Resonanzfrequenz einer Temperaturmessvorrichtung mit einem erfindungsgemäßen Kabel liegt somit weit oberhalb des Vibrationsspektrums von 0 Hz bis 5.000 Hz.

Der Dehnungsausgleichsabschnitt kann S-förmig oder lyraschleifenartig oder federartig ausgebildet sein. In einer weiteren Ausführungsform der Erfindung ist es denkbar, dass bei der Verwendung von zwei Leitern in einem Kabel jedem Leiter einen andersartig ausgebildeten Dehnungsausgleichsabschnitt aufweist.

Der Leiterendenabschnitt des freiliegenden Leiterabschnitts kann, insbesondere im Längsschnitt, L-förmig ausgebildet sein. Als Längsschnitt ist ein Schnitt entlang der Längsachse bzw. parallel zur Längsachse des Kabels zu verstehen. Als L-Form ist eine derartige Form zu verstehen, wonach sich an einen ersten Abschnitt ein zweiter Abschnitt anschließt, wobei der zweite Abschnitt in etwa senkrecht zum ersten Abschnitt ausgebildet ist. Dabei ist es möglich, dass die beiden Abschnitte einen gerundeten Zwischenabschnitt aufweisen. Von der senkrechten Ausrichtung der beiden Abschnitte kann +/- 15 Grad, insbesondere +/- 10 Grad, insbesondere +/- 5 Grad, abgewichen werden.

Eine derartige L-Form bewirkt, dass das Leiterende derart flach ausgebildet ist, dass ein anzubringender Sensor, insbesondere ein damit zu verbindender Temperatursensor, möglichst einfach positioniert werden kann. Auch das Verbinden des Temperatursensors, insbesondere mittels Chip-Drähten, wird durch eine derartige L-Form erleichtert. Insbesondere ist eine sichere und gut automatisierbare Verbindung, insbesondere eine sichere und gut automatisierbare Schweißung, möglich.

Die L-Form des Leiterendenabschnitts ist vorzugsweise derart ausgebildet, dass der tatsächlich äußerste Abschnitt des Leiterendenabschnitts, nämlich das Leiterende, auf der gleichen Achse oder auf einer parallelen Achse des Leiteranfangs des freiliegenden Leiterabschnitts liegt. Demnach ist es vorteilhaft, sowohl das Leiterende als auch den Leiteranfang des freiliegenden Leiterabschnitts gerade oder ebenförmig auszubilden und zwischen dem Leiterende und dem Leiteranfang den mindestens einen gebogenen Abschnitt des Dehnungsausgleichsabschnitts auszubilden. Dies erleichtert die Herstellung des Kabels. Außerdem wird dadurch die Wirkung des Dehnungsausgleichsabschnitts positiv beeinflusst.

Der Mantel des Kabels kann aus Edelstahl oder Inconel oder Alloy 800 oder Alloy 800 H oder Alloy 600 oder Alloy 601 oder Alloy 602 oder Alloy 602 MCA gebildet sein.

Der mindestens eine Leiter des Kabels kann aus Edelstahl oder Inconel oder Alloy 800 oder Alloy 800 H oder Alloy 600 oder Alloy 601 oder Alloy 602 oder Alloy 602 MCA gebildet sein. Sofern das Kabel ein Thermoelement aufweist, das aus einem Thermodrahtpaar gebildet ist, weisen die beiden Leiter jeweils ein anderes Material auf. Das Material ist vorzugsweise jeweils aus einem Material aus vorheriger Aufzählung möglicher Materialien für einen Leiter des Kabels ausgewählt.

Das Dielektrikum des Kabels kann beispielsweise mineralisches Pulver oder Granulat sein. Vorzugsweise ist das Dielektrikum aus Magnesiumoxid (MgO) und/oder Aluminiumoxid (Al₂O₃) gebildet. Des Weiteren ist es möglich, dass das Dielektrikum einen Glasanteil aufweist. Ein derartiger Glasanteil verhindert Isolationsverluste durch das Eindringen von Feuchtigkeit in das Kabel.

Es ist möglich, dass unterschiedliche Pulver, Granulate, Glas oder verschiedene Gemische an verschiedenen Positionen innerhalb des Mantels eingebracht sind.

Mit anderen Worten ist es möglich, dass unterschiedliche Dielektrikummaterialien in den Mantel eingebracht und verdichtet sind.

Es ist möglich, dass mindestens an einem Ende des Mantels ein Dielektrikummaterial eingfüllt ist, das sich von dem restlichen oder hauptsächlich eingefüllten Dielektrikum unterscheidet.

Ein/das mindestens an einem Ende des Mantels eingefüllte(s) Dielektrikummaterial kann hydrophobe Eigenschaften aufweisen.

Ein/das mindestens an einem Ende des Mantels eingefüllte(s) Dielektrikummaterial kann Bestandteile eines aufschmelzbaren Glases aufweisen.

Ein/das mindestens an einem Ende des Mantels eingefüllte(s) Dielektrikummaterial kann durch mindestens einen Brennvorgang oder durch mindestens einen Sintervorgang das Ende des Mantels wasserdicht abschließen.

Das Dielektrikummaterial/die Dielektrikummaterialien kann/können zusammengesintert und verfestigt sein.

Das Dielektrikummaterial/die Dielektrikummaterialien kann/können an den Mantel angesintert werden.

Die Temperaturmessvorrichtung dient insbesondere zur Anwendung in einem Turbo-Ottomotor.

Der Temperatursensor weist mindestens einen Anschlussdraht auf, wobei der Anschlussdraht mit mindestens einem freiliegenden Leiterabschnitt eines Leiters des Kabels verbunden, insbesondere verschweißt, vorzugsweise laserverschweißt, ist.

In einer bevorzugten Ausführungsform der Temperaturmessvorrichtung ist der Temperatursensor mit anderen Worten nicht direkt mit dem Leiter, insbesondere dem freiliegenden Leiterabschnitt, des Kabels verbunden, sondern indirekt über einen Anschlussdraht. Sofern das Kabel zwei Leiter aufweist weist der Temperatursensor ebenfalls zwei Anschlussdrähte auf, so dass jeder Anschlussdraht mit mindestens einem freiliegenden Leiterabschnitt des Kabels verbunden, insbesondere verschweißt, werden kann.

Bei dem Temperatursensor handelt es sich vorzugsweise um ein Platin-Sensorelement oder ein NTC-Element. Beispielsweise kann es sich bei dem Sensorelement um einen Pt-200-Temperaturwiderstand handeln.

Die erfindungsgemäße Temperaturmessvorrichtung umfasst des Weiteren eine Schutzhülse, in der der Temperatursensor, insbesondere der Temperatursensor und die Verbindungsstelle des Anschlussdrahts mit dem freiliegenden Leiterabschnitt, angeordnet ist/sind, wobei die Schutzhülse zumindest abschnittsweise mit einem Schutzmaterial befüllt ist. Bei der Verbindungsstelle des Anschlussdrahts mit dem freiliegenden Leiterabschnitt handelt es sich vorzugsweise um die Schweißstelle. Die Schutzhülse ist vorzugsweise eine tiefgezogene Schutzhülse, die beispielsweise aus Edelstahl oder Inconel oder Alloy 800 oder Alloy 800 H oder Alloy 600 oder Alloy 601 oder Alloy 602 oder Alloy 602 MCA besteht.

Bei dem Schutzmaterial, mit dem die Schutzhülse befüllt ist, kann es sich beispielsweise um eine Potting-Masse oder Zement handeln. Insbesondere kann es sich bei dem Schutzmaterial um Aluminiumoxid-Pulver, insbesondere um gesintertes Aluminiumoxid-Pulver, handeln. Die Verbindungsstelle des Anschlussdrahts mit dem mindestens einen freiliegenden Leiterabschnitt kann mit anderen Worten im Schutzmaterial, insbesondere in einem Verguss, fixiert sein.

Vorzugsweise ist die Schutzhülse nicht vollständig mit einem Schutzmaterial gefüllt.

Ein weiterer Aspekt der Erfindung betrifft ein Verfahren zum Herstellen eines Kabels, das zum Herstellen einer erfindungsgemäßen Temperaturmessvorrichtung mit einem Temperatursensor verbunden wird. Das Verfahren ist durch folgende Verfahrensschritte gekennzeichnet:
a) Bereitstellen eines Mantels, insbesondere eines rohrförmigen Mantels, mit der Länge L1;
b) Bereitstellen mindestens eines Leiters mit der Länge L2,
   wobei L2 > L1;
c) Durchführen des mindestens einen Leiters durch den Mantel derart, dass mindestens ein Leiterabschnitt als in Relation zum Mantel freiliegender Leiterabschnitt angeordnet wird;
d) Befüllen des Mantels mit einem Dielektrikum, insbesondere mit einem mineralischen, pulverförmigen und/oder granulierten Dielektrikummaterial, und Verdichten des Dielektrikums;
e) Ausbilden eines gebogenen Dehnungsausgleichsabschnitts im freiliegenden Leiterabschnitt, wobei Schritt e) bereits vor Schritt b) und/oder nach Schritt c) durchgeführt wird.

Im Schritt e) kann ein Prägungsvorgang, insbesondere ein Plättungsvorgang, durchgeführt werden. Demnach kann bei dem Ausbilden eines Dehnungsausgleichsabschnitts zeitgleich ein Prägungsvorgang, insbesondere ein Plättungsvorgang, durchgeführt werden. In einer weiteren Ausführungsform der Erfindung ist es möglich, dass zunächst ein gebogener Dehnungsausgleichsabschnitt ausgebildet wird und in einem weiteren, separaten Verfahrensschritt ein Prägungsvorgang, insbesondere ein Plättungsvorgang, durchgeführt wird. Außerdem ist es möglich, dass zunächst ein Prägungsvorgang, insbesondere ein Plättungsvorgang, durchgeführt wird und anschließend der Dehnungsausgleichsabschnitt geformt wird.

Das erfindungsgemäße Verfahren hat den Vorteil, dass ein Prozessschritt der Konfektionierung eines herzustellenden Kabels entfällt und kein Verlust an Dielektrikum und/oder Mantelmaterial entsteht. Es ist daher nicht mehr nötig, die mindestens eine Leitung an mindestens einem Ende von dem Dielektrikum und/oder dem Mantel zu befreien bzw. zu trennen, um die Leitung zur späteren Kontaktierung freizulegen. Da der Dehnungsausgleichsabschnitt direkt in den Leiterabschnitt eingearbeitet wird, wird kein separates Ausgleichselement inklusive der zur Verbindung notwendigen Fügung benötigt. Ebenfalls können aufwändige Prozessschritte der mechanischen Umformung der mindestens einen Leitung zu einer S-Form oder Lyraschleife oder Feder deutlich reduziert oder vereinfacht werden.

Der Schritt e), nämlich das Ausbilden eines gebogenen Dehnungsausgleichsabschnitts im freiliegenden Leiterabschnitt kann bereits vor Schritt b) durchgeführt werden. In diesem Fall weist der bereitgestellte Leiter mit der Länge L2 bereits einen Dehnungsausgleichsabschnitt auf.

Alternativ oder zusätzlich ist es möglich, dass das Ausbilden eines Dehnungsausgleichsabschnitts im freiliegenden Leiterabschnitt nach Schritt c), d.h. nach dem Durchführen des mindestens einen Leiters durch den Mantel, durchgeführt wird. Es ist möglich, dass der Dehnungsausgleichsabschnitt in zwei Schritten hergestellt wird. In diesem Fall ist es möglich, dass der Schritt e) bereits vor Schritt b) und außerdem nach dem Schritt c) durchgeführt wird. Das Durchführen des Schritts e) zeitlich nach dem Schritt c) bedeutet auch, dass der Schritt e) auch erst nach Schritt d) durchgeführt werden kann. In diesem Fall wird der Dehnungsausgleichsabschnitt im freiliegenden Leiterabschnitt nach dem Befüllen des Mantels mit einem Dielektrikum und dem Verdichten des Dielektrikums durchgeführt.

Im Schritt c) kann der mindestens eine Leiter mittels eines leitungsführenden Stampfers in den Mantel eingebracht werden und die mindestens eine Leitung außerhalb des Mantels auf einer Seite fixiert und auf der anderen Seite geklemmt werden, wobei währenddessen in dem freiliegenden Leiterabschnitt der Dehnungsausgleichsabschnitt eingearbeitet wird. Mit anderen Worten wird mittels eines leitungsführenden Stampfers die mindestens eine Leitung in den Mantel eingebracht, so dass mindestens ein freiliegender Leiterabschnitt über das Mantelende hinausragt. Außerhalb des Mantels wird auf einer Seite die Leitung fixiert und auf der anderen Seite geklemmt. Dabei kann direkt ein Prägungsvorgang, insbesondere ein Plättungsvorgang, durchgeführt werden. Nach Durchführen des Schrittes c) kann der Stampfer hochgefahren werden und zum Verdichten des Dielektrikums im Schritt d) zunächst gesenkt und anschließend zum Verdichten verwendet werden. Mit anderen Worten wird der Stampfer hochgefahren. Der Stampfer wird vollständig aus dem Mantel entfernt. Der mindestens eine Draht wird währenddessen jedoch weiter durch den Stampfer geführt. Das Dielektrikum, insbesondere das mineralische Pulver oder Granulat, wird in den Mantel gefüllt und anschließend mit dem Stampfer verdichtet.

Der Schritt d), d.h. das Befüllen des Mantels mit einem Dielektrikum, kann in mehreren Teilschritten und/oder mit abschnittsweise unterschiedlichen Dielektrikummaterialien durchgeführt werden.

Das Einfüllen und Verdichten des Dielektrikums kann in mehreren Schritten durchgeführt bzw. mehrmals wiederholt werden. Hierbei ist es möglich, dass unterschiedliche Pulver, Granulate, Glas oder verschiedene Gemische an verschiedenen Positionen innerhalb des Mantels eingebracht werden.

Insbesondere ist es möglich, dass unterschiedliche Dielektrikummaterialien in den Mantel eingebracht und verdichtet werden.

Es ist möglich, dass mindestens an einem Ende des Mantels ein Dielektrikummaterial verwendet oder eingefüllt wird, das sich von dem restlichen oder hauptsächlich verwendeten oder eingefüllten Dielektrikum unterscheidet.

Ein/das mindestens an einem Ende des Mantels verwendete(s) oder eingefüllte(s) Dielektrikummaterial kann hydrophobe Eigenschaften aufweisen.

Ein/das mindestens an einem Ende des Mantels verwendete(s) oder eingefüllte(s) Dielektrikummaterial kann Bestandteile eines aufschmelzbaren Glases aufweisen. Dieser Bestandteil eines aufschmelzbaren Glases schmilzt vorzugsweise bei mindestens einem Brennvorgang oder bei mindestens einem Sintervorgang an oder auf.

Ein/das mindestens an einem Ende des Mantels verwendete(s) oder eingefüllte(s) Dielektrikummaterial kann durch mindestens einen Brennvorgang oder durch mindestens einen Sintervorgang das Ende des Mantels wasserdicht abschließen. Das Dielektrikummaterial/die Dielektrikummaterialien kann/können mittels mindestens eines Brennvorganges zusammengesintert und verfestigt werden.

Das Dielektrikummaterial/die Dielektrikummaterialien kann/können mittels mindestens eines Brennvorganges an den Mantel angesintert werden.

Es ist möglich, dass im Schritt c) mindestens ein Leiter derart durch den Mantel geführt wird, dass zwei Leiterabschnitte als in Relation zum Mantel freiliegende Leiterabschnitte angeordnet werden. Mit anderen Worten kann der Leiter über beide Enden des Mantels überstehen.

Der mindestens eine Leiter kann nach dem Schritt e) abgelängt werden. Der mindestens eine Leiter kann dabei auf Sollmaß abgelängt werden. Nach einem Hochfahren des Stampfers kann somit der Draht geschnitten werden.

Es ist möglich, dass nach Schritt d), insbesondere nach Schritt e), ein Sintervorgang durchgeführt wird, so dass das Dielektrikum verfestigt wird. Vorzugsweise wird der Sintervorgang bei Temperaturen von 800 °C bis 1.100 °C durchgeführt.

Eine Temperaturmessvorrichtung, insbesondere eine erfindungsgemäße Temperaturmessvorrichtung, kann dadurch hergestellt werden, dass der mindestens eine Leiter des Kabels, insbesondere der freiliegende Leiterabschnitt durch Punkt- oder Laserschweißen mit dem Sensorelement verbunden wird. Vorzugsweise ist das Sensorelement mittels eines Anschlussdrahtes mit dem mindestens einen Leiter elektrisch verbunden.

Anschließend kann über den Sensor eine Hülse geschoben werden. Die Schutzhülse ist vorzugsweise mit Schutzmaterial befüllt. Bei dem Schutzmaterial kann es sich um eine isolierende Masse oder um Pulver handeln. Das Schutzmaterial kann ein Verguss sein. Das Schutzmaterial dient beispielsweise der Fixierung des Sensorelements.

Die Schutzhülse kann mit dem Mantel, insbesondere mit einem rohrförmigen Mantel, verbunden werden. Beispielsweise ist die Schutzhülse mit dem Mantel mittels Punktschweißung (vor)fixiert.

Zum Härten des in der Schutzhülse befindlichen Schutzmaterials kann ein Sinterprozess durchgeführt werden. Zu einem vollständigen Verbinden der Schutzhülse mit dem Mantel des Kabels kann ein weiterer Schweißvorgang durchgeführt werden. Vorzugsweise wird die Schutzhülse mit dem Mantel des Kabels mittels einer Rundschweißung verbunden.

Nachfolgend wird die Erfindung anhand von Ausführungsbeispielen unter Bezug auf die beigefügten schematischen Zeichnungen näher erläutert.

In diesen zeigen:
- Fig. 1: ein Kabel als Teil einer erfindungsgemäßen Temperaturmessvorrichtung; und
- Fig. 2a u. 2b: Schnittdarstellungen durch den Schutzhülsenbereich einer erfindungsgemäßen Temperaturmessvorrichtung mit Kabel.

Im Folgenden werden für gleiche und gleichwirkende Teile gleiche Bezugsziffern verwendet.

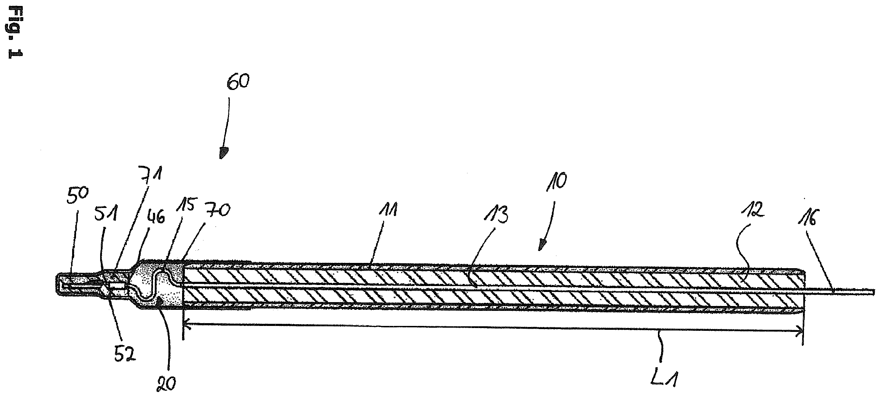

In Fig. 1 ist ein erfindungsgemäßes Kabel 10 als Teil einer erfindungsgemäßen Temperaturmessvorrichtung 60 dargestellt. Das Kabel 10 dient zum Kontaktieren eines Sensors 50. Bei dem Sensor 50 handelt es sich um einen Temperatursensor. Das Kabel 10 umfasst einen Mantel 11, ein Dielektrikum 12 und einen in Fig. 1 erkennbaren Leiter 13. Das Kabel 10 kann auch zwei Leiter 13 umfassen. Im dargestellten Längsschnitt durch das Kabel 10 ist lediglich ein Leiter 13 zu erkennen. Der Leiter 13 ist in dem Mantel 11 derart angeordnet, dass der Leiter 13 von den Mantel 11 mit Hilfe des Dielektrikums 12 räumlich getrennt ist. Der Leiter 13 weist einen ersten freiliegenden Leiterabschnitt 15 und einen zweiten freiliegenden Leiterabschnitt 16 auf. Als freiliegender Leiterabschnitt ist ein derartiger Abschnitt des Leiters 13 zu verstehen, der nicht von einem Dielektrikum 12 oder dem Mantel 11 umgeben ist. Der erste freiliegende Leiterabschnitt 15 umfasst einen gebogenen Dehnungsausgleichsabschnitt 20. Der Dehnungsausgleichsabschnitt 20 ist S-förmig ausgebildet.

Der Temperatursensor 50 ist mittels eines Anschlussdrahtes 51 mit dem ersten freiliegenden Leiterabschnitt 15 verbunden. Hierzu ist der Anschlussdraht 51 an der Verbindungsstelle 52 mit dem Leiterende 46 des freiliegenden Leiterabschnitts 15 verschweißt. Die Temperaturmessvorrichtung 60 umfasst des Weiteren eine Schutzhülse 70, in der der Temperatursensor 50 und die Verbindungsstelle 52 des Anschlussdrahts 51 mit dem freiliegenden Leiterabschnitt 15 angeordnet sind. Die Schutzhülse 70 ist mit einem Schutzmaterial 71 befüllt. Bei dem Schutzmaterial handelt es sich beispielsweise um einen Aluminiumoxid-Verguss. Die Vergussmasse oder die Schutzmasse dient u.a. zur Fixierung der Verbindungsstelle 52. Wie außerdem zu erkennen ist, ist die Schutzhülse 70 nicht vollständig mit einem Schutzmaterial 71 befüllt. Insbesondere im Bereich des ausgebildeten Dehnungsausgleichsabschnitts 20 ist keine Vergussmasse bzw. kein Schutzmaterial 71 ausgebildet. Somit wird eine Ausdehnung des Dehnungsausgleichsmaterials 20 ermöglicht.

Der zweite freiliegende Leiterabschnitt 16 dient zur Verbindung des Kabels 10 mit einer Auswerteeinheit. Beispielsweise kann der zweite freiliegende Leiterabschnitt 16 mit einer Steuereinheit eines Fahrzeugs, insbesondere eines Fahrzeugs mit einem Turbo-Ottomotor, verbunden sein.

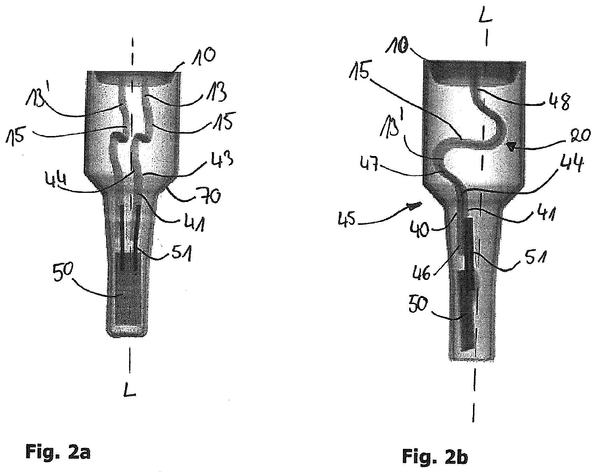

Die Fig. 2a und 2b zeigen Schnitte durch den Bereich der Schutzhülse 70 der Temperaturmessvorrichtung 60. Die Fig. 2b ist dabei in etwa eine Vergrößerung der Schutzhülse 70 der Fig. 1. Bei der Fig. 2a handelt es sich um eine um 90 Grad gedrehte Darstellung des Hülsenbereichs. In diesem Zusammenhang wird klar, dass das Kabel 10 zwei Leiter 13 mit freiliegenden Leiterabschnitten 15 und entsprechenden ausgebildeten Dehnungsausgleichsabschnitten 20 aufweist. Der Dehnungsausgleichsabschnitt 20 weist eine die Federwirkung und die Steifigkeit des Dehnungsausgleichsabschnitts 20 optimierende Prägung auf. Die Prägung ist als Plättung ausgebildet. Im Vergleich zu einem runden Leiterquerschnitt weist der freiliegende Leiterabschnitt vier Seiten mit Abflachungen auf.

In Fig. 2a ist eine Leiterunterseite 41 zu erkennen. In Fig. 2b sind die Leiterunterseite 41, die Leiteroberseite 40 sowie eine Seitenfläche 44 zu erkennen. Der Leiterquerschnitt ist somit nahezu rechteckig ausgebildet. Die jeweiligen Seiten 40, 41, 43 und 44 können an den Ecken Abrundungen aufweisen. Die Plättung des Dehnungsausgleichsabschnitts 20 erfolgt durch ein Pressen des freien Leiterabschnitts 15 sowohl in horizontaler als auch in vertikaler Richtung.

In Fig. 2b ist zu erkennen, dass der Dehnungsausgleichsabschnitt 20 im Wesentlichen S-förmig ausgebildet ist. Die S-Form ist um die Längsachse L leicht verdreht.

Der Leiterendenabschnitt 45 des freiliegenden Leiterabschnitts 15 ist im Wesentlichen L-förmig ausgebildet. Das Leiterende 46 und ein Teil 47 der Form bilden im Wesentlichen eine L-Form. Dabei ist der Abschnitt des Ls, nämlich der Teil des S-förmigen Abschnitts 47, nicht vollständig senkrecht zum Leiterende 46 sondern ist 15 Grad abweichend von der senkrechten Ausrichtung zum Leiterende 46 angeordnet.

Das Leiterende 46 und der Leiteranfang 48 erstrecken sich somit auf einer Parallelen zur Längsachse L.

Die L-Form bewirkt, dass der Temperatursensor 50 mittels des Anschlussdrahtes 51 einfach in Relation zum freiliegenden Leiterabschnitt 15 positionierbar ist und einfach mit dem bereitgestellten Leiterabschnitt 15 verbunden, insbesondere verschweißt werden kann.

Die Prägung des Dehnungsausgleichsabschnitts 20 optimiert die Federwirkung und die Steifigkeit des Dehnungsausgleichsabschnitts 20.

### Bezugszeichenliste

- 10: Kabel
- 11: Mantel
- 12: Dielektrikum
- 13, 13': Leiter
- 15: Erster freiliegender Leiterabschnitt
- 16: Zweiter freiliegender Leiterabschnitt
- 20: Dehnungsausgleichsabschnitt
- 40: Leiteroberseite
- 41: Leiterunterseite
- 43: Seitenfläche
- 44: Seitenfläche
- 45: Leiterendenabschnitt
- 46: Leiterende
- 47: Teil der S-Form
- 48: Leiteranfang
- 50: Temperatursensor
- 51: Anschlussdraht
- 52: Verbindungsstelle
- 60: Temperaturmessvorrichtung
- 70: Schutzhülse
- 71: Schutzmaterial
- 80: Thermoelement
- L: Längsachse
- L1: Länge Mantel

## Patentansprüche

1. Temperaturmessvorrichtung (60), umfassend einen Temperatursensor (50), der mit mindestens einem Kabel (10) verbunden ist,
wobei das Kabel (10) einen Mantel (11), ein Dielektrikum (12) und mindestens einen Leiter (13) umfasst, wobei der mindestens eine Leiter (13) in dem Mantel (11) derart angeordnet ist, dass der Leiter (13) von dem Mantel (11) mit Hilfe des Dielektrikums (12) räumlich getrennt ist,
wobei der mindestens eine Leiter (13) mindestens einen freiliegenden Leiterabschnitt (15) aufweist,
wobei der Temperatursensor (50) mindestens einen Anschlussdraht (51) aufweist, wobei der Anschlussdraht (51) mit mindestens einem freiliegenden Leiterabschnitt (15) des Leiters (13) des Kabels (10) verbunden ist,
wobei der Temperatursensor (50) in einer Schutzhülse (70) angeordnet ist, wobei die Schutzhülse (70) zumindest abschnittsweise mit einem Schutzmaterial (71) befüllt ist,
**dadurch gekennzeichnet, dass**
der freiliegende Leiterabschnitt (15) einen gebogenen Dehnungsausgleichsabschnitt (20) umfasst, der zumindest abschnittsweise eine die Federwirkung und die Steifigkeit des Dehnungsausgleichsabschnitts (20) optimierende Prägung aufweist.

2. Temperaturmessvorrichtung (60) nach Anspruch 1,
**dadurch gekennzeichnet, dass**
die Prägung als Plättung, insbesondere als eine im Querschnitt ausgebildete mindestens zweiseitige Abflachung eines runden Leiterquerschnitts, ausgebildet ist.

3. Temperaturmessvorrichtung (60) nach Anspruch 1 oder 2,
**dadurch gekennzeichnet, dass**
der Dehnungsausgleichsabschnitt (20) S-förmig oder lyraschleifenartig oder federartig ausgebildet ist.

4. Temperaturmessvorrichtung (60) nach einem der Ansprüche 1 bis 3,
**dadurch gekennzeichnet, dass**
der Leiterendenabschnitt (45) des freiliegenden Leiterabschnitts (15), insbesondere im Längsschnitt, L-förmig ausgebildet ist.

5. Temperaturmessvorrichtung (60) nach einem der vorhergehenden Ansprüche,
**dadurch gekennzeichnet, dass**
der Anschlussdraht (51) mit mindestens einem freiliegenden Leiterabschnitt (15) eines Leiters (13) des Kabels (10) verschweißt, vorzugsweise laserverschweißt, ist.

6. Temperaturmessvorrichtung (60) nach einem der vorhergehenden Ansprüche,
**dadurch gekennzeichnet, dass**
der Temperatursensor (50) und die Verbindungsstelle (52) des Anschlussdrahts (51) mit dem freiliegenden Leiterabschnitt (15) in der Schutzhülse (70) angeordnet sind.

7. Verfahren zum Herstellen eines Kabels (10), das zum Herstellen einer Temperaturmessvorrichtung (60) nach einem der Ansprüche 1 bis 6 mit einem Temperatursensor (50) verbunden wird
**gekennzeichnet durch**
folgende Verfahrensschritte:
a) Bereitstellen eines Mantels (11), insbesondere eines rohrförmigen Mantels, mit der Länge L1;
b) Bereitstellen mindestens eines Leiters (13) mit der Länge L2, wobei L2 > L1;
c) Durchführen des mindestens einen Leiters (13) durch den Mantel (11) derart, dass mindestens ein Leiterabschnitt als in Relation zum Mantel (11) freiliegender Leiterabschnitt (15) angeordnet wird;
d) Befüllen des Mantels (11) mit einem Dielektrikum (12), insbesondere mit einem mineralischen, pulverförmigen und/oder granulierten Dielektrikummaterial, und Verdichten des Dielektrikums (12);
e) Ausbilden eines gebogenen Dehnungsausgleichsabschnitts (20) im freiliegenden Leiterabschnitt (15), wobei Schritt e) bereits vor Schritt b) und/oder nach Schritt c) durchgeführt wird.

8. Verfahren nach Anspruch 7,
**dadurch gekennzeichnet, dass**
im Schritt e) ein Prägungsvorgang, insbesondere ein Plättungsvorgang, durchgeführt wird.

9. Verfahren nach Anspruch 7 oder 8,
**dadurch gekennzeichnet, dass**
im Schritt c) der mindestens eine Leiter (13) mittels eines leitungsführenden Stampfers in den Mantel (11) eingebracht wird und die mindestens eine Leitung (13) außerhalb des Mantels (11) auf einer Seite fixiert und auf der anderen Seite geklemmt wird, wobei währenddessen in den freiliegenden Leiterabschnitt (15) der Dehnungsausgleichsabschnitt (20) eingearbeitet wird.

10. Verfahren nach Anspruch 9,
**dadurch gekennzeichnet, dass**
nach Durchführen des Schrittes c) der Stampfer hochgefahren wird und zum Verdichten des Dielektrikums im Schritt d) der Stampfer zunächst gesenkt und anschließend zum Verdichten verwendet wird.

11. Verfahren nach einem der Ansprüche 7 bis 10,
**dadurch gekennzeichnet, dass**
der mindestens eine Leiter (13) nach dem Schritt e) abgelängt wird.

12. Verfahren nach einem der Ansprüche 7 bis 11,
**gekennzeichnet durch**
einen Sintervorgang, der nach Schritt d), insbesondere nach Schritt e), durchgeführt wird, sodass das Dielektrikum (12) verfestigt wird.

## Claims

1. Temperature device (60) comprising a temperature sensor (50) which is connected to at least one cable (10),
wherein the cable (10) has an outer sheath (11), a dielectric material (12) and at least one conductor (13), wherein the at least one conductor (13) is arranged in the outer sheath (11) in such a way that the conductor (13) is spatially separated from the outer sheath (11) by way of the dielectric material (12),
wherein the at least one conductor (13) has at least one exposed conductor section (15),
wherein the temperature sensor (50) comprises at least one connection wire (51), wherein the connection wire (51) is connected to at least one exposed conductor section (15) of the conductor (13) of the cable (10),
wherein the temperature sensor (50) is arranged in a protective sleeve (70), wherein the protective sleeve (70) is at least filled in sections with a protective material (71),
**characterised in that**
the exposed conductor section (15) comprises a curved expansion compensation section (20) which, at least in parts has an impression that optimises the spring effect and the stiffness of the expansion compensation section (20) .

2. Temperature measuring device (60) according to claim 1 **characterised in that**
the impression is in the form of flattening, in particular in the form of at least two-sided cross-sectional flattening of a round conductor cross-section.

3. Temperature measuring device (60) according to claim 1 or 2 **characterised in that**
the expansion compensation section (20) is S-shaped or lyre-shaped or spring-like in design.

4. Temperature measuring device (60) according to any one of claims 1 to 3
**characterised in that**
the conductor end section (45) of the exposed conductor section (15) is L-shaped, more particularly in longitudinal section.

5. Temperature measuring device (60) according to any one of the preceding claims
**characterised in that**
the connection wire (51) is welded, preferably laser-welded, to at least one exposed conductor section (15) of a conductor (13) of the cable (10).

6. Temperature sensor (60) according to any one of the preceding claims
**characterised in that** the
temperature sensor (50) and the connection point (52) of the connection wire (51) with the exposed conductor section (15) are arranged in the protective sheath (70).

7. Method of producing a cable (10) that for producing a temperature measuring device (60) according to any one of claims 1 to 6 is connected to a temperature sensor (50)
**characterised by** the following processing steps:
a) provision of an outer sheath (11), more particular a tubular outer sheath, with a length L1;
b) provision of at least one conductor (13) with length L2, wherein L2 > L1;
c) passing the at least one conductor (13) through the outer sheath (11) in such a way that at least one conductor section is arranged as an exposed conductor section (15) in relation to the outer sheath (11);
d) filling the outer sheath (11) with a dielectric material (12), in particular with a mineral, powder-like or and/or granulated dielectric material, and compressing the dielectric material (12) ;
e) forming a curved expansion compensation section (20) in the exposed conductor section (15), wherein step e) is carried out before step b) and/or after step c).

8. Method according to claim 7
**characterised in that**
in step e) an impressing procedure, in particular a flattening procedure, is carried out.

9. Method according to claim 7 or 8
**characterised in that**
in step c) the at least one conductor (13) is introduced by means of a conductor-guiding tamper into the outer sheath (11) and the at least one conductor (13) outside the outer sheath (11) is fixed on one side and clamped on the other side, wherein during this the exposed conductor section (15) of the expansion compensation section (20) is incorporated.

10. Method according to claim 9
**characterised in that**
after carrying out step c) the tamper is raised and for compressing the dielectric material in step d) the tamper is initially lowered and then used for compressing.

11. Method according to any one of claims 7 to 10
**characterised in that**
the at least one conductor (13) is cut to length after step e).

12. Method according to any one of claims 7 to 11
**characterised in** by
a first sintering process which is carried out after step d), more particularly after step e), so that the dielectric material (12) is compressed.

## Revendications

1. Dispositif de mesure de température (60), comprenant un capteur de température (50), qui est connecté sur au moins un câble (10),
le câble (10) comprenant une gaine (11), un diélectrique (12) et au moins un conducteur (13), l'au moins un conducteur (13) étant placé dans la gaine (11) de telle sorte que le conducteur (13) soit physiquement séparé de la gaine (11) à l'aide du diélectrique (12), l'au moins un conducteur (13) comportant au moins un segment de conducteur (15) dénudé,
le capteur de température (50) comportant au moins un fil de raccordement (51), le fil de raccordement (51) étant connecté avec au moins un segment de conducteur (15) dénudé du conducteur (13) du câble (10),
le capteur de température (50) étant placé dans un fourreau protecteur (70), le fourreau protecteur (70) étant rempli au moins par endroits d'une matière protectrice (71),
**caractérisé en ce que**
le segment de conducteur (15) dénudé comprend un segment compensateur de dilatation (20) incurvé, qui au moins par endroits présente une empreinte optimisant la résilience et la rigidité du segment compensateur de dilatation (20).

2. Dispositif de mesure de température (60) selon la revendication 1,
**caractérisé en ce que**
l'empreinte est conçue sous la forme d'un écrasement, notamment sous la forme d'un méplat bilatéral conçu dans la section transversale d'une section transversale ronde de conducteur.

3. Dispositif de mesure de température (60) selon la revendication 1 ou 2,
**caractérisé en ce que**
le segment compensateur de dilatation (20) est conçu en forme de S ou en forme de boucle de lyre ou en forme de ressort.

4. Dispositif de mesure de température (60) selon l'une quelconque des revendications 1 à 3,
**caractérisé en ce que**
notamment en coupe longitudinale, le segment d'extrémité de conducteur (45) du segment de conducteur (15) dénudé est conçu en forme de L.

5. Dispositif de mesure de température (60) selon l'une quelconque des revendications précédentes,
**caractérisé en ce que**
le fil de raccordement (51) est soudé, de préférence soudé au laser avec au moins un segment de conducteur (15) dénudé d'un conducteur (13) du câble (10).

6. Dispositif de mesure de température (60) selon l'une quelconque des revendications précédentes,
**caractérisé en ce que**
le capteur de température (50) et le point de connexion (52) du fil de raccordement (51) avec le segment de conducteur (15) dénudé sont placés dans le fourreau protecteur (70).

7. Procédé, destiné à fabriquer un câble (10), que l'on connecte avec un capteur de température (50) pour fabriquer un dispositif de mesure de température (60) selon l'une quelconque des revendications 1 à 6,
**caractérisé par**
les étapes de procédé suivantes, consistant à :
a) mettre à disposition une gaine (11), notamment une gaine de forme tubulaire, de la longueur L1;
b) mettre à disposition au moins un conducteur (13) de la longueur L2, L2 étant > L1;
c) faire passer l'au moins un conducteur (13) à travers la gaine (11), de sorte qu'au moins un segment de conducteur soit placé comme un segment de conducteur (15) dénudé en relation avec la gaine (11);
d) remplir la gaine (11) avec un diélectrique (12), notamment avec une matière diélectrique minérale, pulvérulente et/ou granulée, et compresser le diélectrique (12);
e) créer un segment compensateur de dilatation (20) incurvé dans le segment de conducteur (15) dénudé, l'étape e) étant réalisée déjà avant l'étape b) et/ou après l'étape c).

8. Procédé selon la revendication 7,
**caractérisé en ce que**
dans l'étape e) l'on réalise un processus de frappe, notamment un processus d'écrasement.

9. Procédé selon la revendication 7 ou 8,
**caractérisé en ce que**
dans l'étape c), l'on introduit l'au moins un conducteur (13) dans la gaine (11) au moyen d'un pilon guide-ligne et l'on fixe l'au moins une ligne (13) par un côté, à l'extérieur de la gaine (11) et on la pince de l'autre côté, pendant ce temps, le segment compensateur de dilatation (20) étant incorporé dans le segment de conducteur (15).

10. Procédé selon la revendication 9,
**caractérisé**
**en ce qu'**après l'exécution de l'étape c), on relève le pilon et pour compresser le diélectrique à l'étape d), on abaisse d'abord le pilon et on l'utilise par la suite pour la compression.

11. Procédé selon l'une quelconque des revendications 7 à 10,
**caractérisé en ce que**
l'on coupe en longueur l'au moins un conducteur (13) après l'étape e).

12. Procédé selon l'une quelconque des revendications 7 à 11,
**caractérisé par**
un processus de frittage, que l'on exécute après l'étape d), notamment après l'étape e), de sorte à solidifier le diélectrique (12).
